# EUROPÄISCHE PATENTSCHRIFT

(11) **EP 0 806 879 B1**
(45) Veröffentlichungstag und Bekanntmachung des Hinweises auf die Patenterteilung: **09.03.2005**
(21) Anmeldenummer: 97250148.0
(22) Anmeldetag: 30.04.1997
(51) Int. Cl.: H04Q 7/34

(54) **Testeinrichtung zur Überprüfung der Leitweglenkung und Gebührenerfassung in einem Mobilkommunikationsnetz und Verfahren zu dessen Betrieb**
Testing device for examination of the routing and metering in a mobile communication system and method for operating same
Appareil de test pour examiner le routage et la taxation dans un réseau de communication mobile et procédé d'utilisation

(30) Priorität: 08.05.1996 DE 19620164
(43) Veröffentlichungstag der Anmeldung: 12.11.1997
(60) Teilanmeldung: 04022090.7
(73) Patentinhaber: Agilent Technologies, Inc. (a Delaware Corporation), Palo Alto, California 94306-2024 (US)
(72) Erfinder: Long, Derek, Dr.-Ing., 40225 Düsseldorf (DE); Hengels, Erik, Dipl.-Ing., 41352 Korschenbroich (DE)
(74) Vertreter: Schoppe, Fritz, Dipl.-Ing.

(56) Entgegenhaltungen:
- EP-A- 0 418 853
- EP-A- 0 589 576
- WO-A-94/27385
- ROSAR W: "TESTSTRATEGIEN, MESSGERAETE UND -SYSTEME IM GSM - TEIL 1" NTZ NACHRICHTENTECHNISCHE ZEITSCHRIFT, Bd. 47, Nr. 9, 1. September 1994 (1994-09-01), Seiten 654-658, XP000468041 ISSN: 0027-707X
- ROSAR W: "TESTSTRATEGIEN, MESSGERATE UND -SYSTEME IM GSM. TEIL 2" NTZ NACHRICHTENTECHNISCHE ZEITSCHRIFT, Bd. 47, Nr. 10, 1. Oktober 1994 (1994-10-01), Seiten 726-730, 732, XP000473217 ISSN: 0027-707X

## Beschreibung

Die Erfindung betrifft eine Testeinrichtung zur Überprüfung der Leitweglenkung und Gebührenerfassung in einem Mobilkommunikationsnetz sowie ein Verfahren zu dessen Betrieb.

Mobilkommunikationsnetze sind hinsichtlich ihres Aufbaus bekannt und insbesondere in Jacek Biala "Mobilfunk und intelligente Netze", Friedrich Vieweg & Sohn Verlagsgesellschaft mbH, Braunschweig/Wiesbaden, 1995 ausführlich beschrieben.

Ein derartiges Mobilkommunikationsnetz besteht im wesentlichen aus einer Mehrzahl untereinander vernetzter Vermittlungssysteme an die sogenannte Basisstationssysteme anschließbar sind sowie einer Vielzahl von Mobilteilnehmern. Die Vermittlungssysteme bestehen dabei zumindest aus einer Vermittlungseinrichtung und einer Mehrzahl von Datenbanken zur Verwaltung von Mobilteilnehmerdaten. Die im Zusammenhang mit der Erfindung wichtigsten Datenbanken sind die Heimatdatenbank (HLR, Home Location Register), die Besucherdatenbank (VLR, Visitors Location Register) und die Authentisierungszentrale (AUC, Authentication Center). Darüber hinaus weisen die Vermittlungssysteme des Mobilkommunikationsnetzes Schnittstellen zu anderen Kommunikationsnetzen auf.

In der Heimatdatenbank, HLR, werden die Stammdaten eines jeden Kunden gespeichert. Hier stehen permanente Kundendaten wie beispielsweise die internationale Teilnehmerkennung (IMSI, International Mobil Subscriber Identity), die internationale Mobilteilnehmerrufnummer (MSISDN, Mobil Station ISDN Number), der Authentisierungsschlüssel und auch temporäre Daten wie beispielsweise die Adresse der Besucherdatenbank (VLR-Adresse) des letzten bzw. aktuellen Aufenthaltsortes des Mobilteilnehmers.

In der Besucherdatenbank (VLR) werden die Daten aller Kunden und Mobilstationen gespeichert, die im Einzugsbereich der entsprechenden Vermittlungseinrichtung aktiv sind.

Mit Hilfe der Authentisierungszentrale (AUC), die der Heimatdatenbank (HLR) angegliedert ist, ist prüfbar, ob ein Kunde im Besitz einer gültigen SIM-Karte ist und somit die Berechtigung zur Inanspruchnahme von Diensten des Mobilkommunikationsnetzes aufweist. Dabei ist die SIM-Karte (Subscriber Identity Module) zusammen mit einer persönlichen Identifikationsnummer der physische Teil der Zugangsberechtigung zu Diensten des Mobilkommunikationsnetzes. Jeder mit einer Berechtigungskarte (SIM) ausgestattete Mobilteilnehmer ist in der Lage mit mindestens einem Basisstationssystem in Funkverbindung zu treten.

Die Basisstationssysteme umfassen alle Mittel zur Kommunikation mit einer Mehrzahl von Mobilteilnehmern und zur bidirektionalen Weiterleitung empfangener und zu sendender Signale zur und von der angeschlossen Vermittlungseinrichtung.

In einem derartigen Mobilkommunikationsnetz treten sowohl in der Aufbauphase als auch während des laufenden Betriebes häufig Änderungen in der Netzkonfiguration ein, die durch punktuelle Softwareaktuatisierung einzelner Vermittlungssysteme oder durch Erweiterungen der physischen Netzstruktur infolge zusätzlicher Basisstationen hervorgerufen werden, in deren Folge zumindest Teile des Mobilkommunikationsnetzes hinsichtlich ihrer Funktionsfähigkeit zu testen sind. Die Testvorgänge umfassen dabei Signalisierungsprozeduren, Kanalauf- und -abbau sowie die Leitweglenkung und Gebührenerfassung.

Die Leitweglenkung, das sogenannte Routing, umfaßt alle Vorgänge zur Auswahl von Netzverknüpfungen zwischen verschiedenen Vermittlungssystemen zur Herstellung einer Verbindung zwischen einem im Einzugsbereich eines ersten Vermittlungssystems rufenden Teilnehmers und einem im Einzugsbereich eines zweiten Vermittlungssystems angeordneten angerufenen Teilnehmers. Darüber hinaus ist die Konsistenz der in den angegliederten Datenbanken jedes Vermittlungssystems enthaltenen Daten zu prüfen.

Infolge der Vielzahl von Signalisierungsmöglichkeiten und gegenseitiger Herstellung von Gesprächsverbindungen sind derartige Tests sehr aufwendig und stellen zudem eine zusätzliche Belastung der Netzkapazität dar. Wenngleich diese Tests vornehmlich in verkehrsschwachen Zeiten, insbesondere während der Nacht, durchgeführt werden, ist der Zeitaufwand für die vollständige Austestung aller Systemeigenschaften zumindest bei manueller Durchführung so zeitaufwendig, daß das Zeitfenster der verkehrsschwachen Zeit oft nicht ausreicht. Andererseits ist es erforderlich, alle vorgenommenen Änderungen vor der Freigabe der Systembestandteile für gebührenpflichtige Nutzer ausgiebig und umfassend getestet zu haben.

Es ist bekannt in der Entwicklungs-, Aufbau- und Inbetriebnahmephase eines GSM_Netzes komplexe Testsysteme zur Anwendung zu bringen. So sind z.B. in dem Aufsatz "Teststrategien, Meßgeräte und -systeme im GSM",ntz,1994,Heft 9 und 10, Seiten 654 bis 658 und 726 bis 732, Testverfahren für die folgenden Testaufgaben beschrieben:
- Test der physikalischen Parameter
- Protokolltest- Test einzelner Protokollmechanismen
- Test des Protokollablaufs von Funktionen und Diensten
- Test der Leistungsfähigkeit des Netzes oder von Komponenten
- Test der Qualität der Dienste
- Test des Protokoll- und Lastverhaltens
- Test des Mobilvermittlungssystems
- Test des Basissubsystems
- Test der Basisstations-, Sende- und Empfangseinrichtung
- Test der Mobilstationen und
- Test des Übergangs vom GSM in das Festnetz.

Die Vielzahl der erforderlichen Tests stellt hinsichtlich zeitlichem und gerätemäßigem Aufwand hohe Anforderungen an den Netzbetreiber.

Aus der EP 0418853 A ist bereits ein System bekannt, um innerhalb eines Mobilkommunikationssystems zu bestimmen, ob eine Leitungsverbindung richtigerweise zwischen einer Radiobasisstation und einer Mobilstation ausgeführt worden ist. Ein derartiges System dient im Gegensatz zu der beanspruchten Testeinrichtung nicht zur Überprüfung der Leitweglenkung und Gebührenerfassung in einem Mobilkommunikationsnetz.

Aus der EP 0589576 A ist ein System zum Testen von Kommunikationsnetzwerk-Komponenten bekannt, das sich eines Simulators zum Emulieren von Kommunikationen längs relevanter Netzwerkeinheiten bedient. Dieses bekannte System beurteilt, ob eine Verarbeitung in den Komponenten des Netzwerks stattfindet. Ein Sprachprozessor liefert eine Schnittstelle für einen Tester, um den Simulator und den Nachrichtenprozessor anzusteuern.

Der Erfindung liegt daher die Aufgabe zugrunde, die Vielzahl der erforderlichen Tests zu automatisieren und dabei hinsichtlich der vorgenommenen Änderungen in dem zu testenden Mobilkommunikationsnetz zu systematisieren und den änderungsindividuellen Testablauf zu betreiben.

Erfindungsgemäß wird diese Aufgabe mit den Mitteln der Patentansprüche 1 und 12 gelöst. Vorteilhafte Ausgestaltungen der Erfindung sind in den Patentansprüchen 2 bis 11 sowie 13 bis 17 beschrieben.

Bevorzugte Ausführungsbeispiele der vorliegenden Erfindung werden nachfolgend unter Bezugnahme auf die beiliegenden Zeichnungen näher beschrieben. Es zeigen:
Fig. 1 ein Blockdiagramm einer Testeinrichtung zur Überprüfung der Leitweglenkung und der Gebührenerfassung in einem Mobilkommunikationsnetz;
Fig. 2 ein Blockdiagramm eines Multiplexers als Bestandteil der in Fig. 1 gezeigten Testeinrichtung; und
Fig. 3 ein Blockdiagramm zur Erläuterung eines Verfahrens zum Testen eines Mobilkommunikationsnetzes mittels zweier Testeinrichtungen.

Die Erfindung wird nachstehend anhand eines Ausführungsbeispiels näher erläutert.

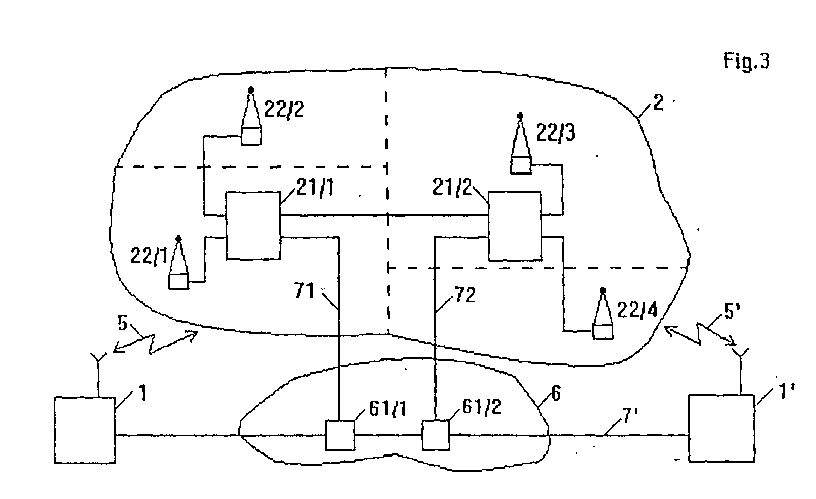

Unter Bezugnahme auf Figur 3 wird von einem für sich bekannten Mobilkommunikationsnetz 2 ausgegangen, das im wesentlichen aus einer Mehrzahl untereinander vernetzter Vermittlungssysteme 21/1 und 21/2 besteht, die mit Basisstationssystemen 22/1 bis 22/4 verbunden sind. Des weiteren gehören Mobilteilnehmer zum Mobilkommunikationsnetz 2, die jeweils mit einem kartenartigen Datenmodul ausgestattet sind und mit mindestens einem Basisstationssystem 22/1 bis 22/4 in Funkverbindung treten können.

Dabei besteht jedes Vermittlungssystem 21/1 und 21/2 aus einer Vermittlungseinrichtung und einer Mehrzahl von Datenbanken zur Verwaltung von Mobilteilnehmerdaten. Diese Datenbanken umfassen die Heimatdatenbank (HLR), in der die Stammdaten eines jeden Kunden gespeichert werden, die Besucherdatenbank (VLR), in der die Daten aller Kunden und Mobilteilnehmer gespeichert werden, die sich aktuell im Einzugsbereich des jeweiligen Vermittlungssystems 21/1 und 21/2 befinden, die Authentisierungszentrale (AUC), mit der geprüft wird, ob ein Kunde im Besitz eines gültigen Datenmoduls (SIM-Karte) ist, und das Geräte-ldentitätsregister (EIR), in dem die Seriennummem der Mobilteilnehmer gespeichert werden.

Darüber hinaus werden in der Heimatdatenbank (HLR) die internationale Teilnehmerkennung (IMSI), die internationale Mobilteilnehmerrufnummer (MSISDN), der Authentisierungsschlüssel und ein Zeiger auf dasjenige Vermittlungssystem 21/1 und 21/2, in dessen Einzugsbereich sich ein in der Heimatdatenbank (HLR) registrierter Mobilteilnehmer aktuell befindet oder zuletzt befunden hat.

Jedes Vermittlungssystem 21/1 und 21/2 kann darüber hinaus Schnittstellen bzw. Zugänge 71 und 72 zu anderen Kommunikationsnetzen 6 aufweisen.

Die Basisstationssysteme 22/1 bis 22/3 umfassen jeweils Basisstationen und zugehörige Steuereinrichtungen.

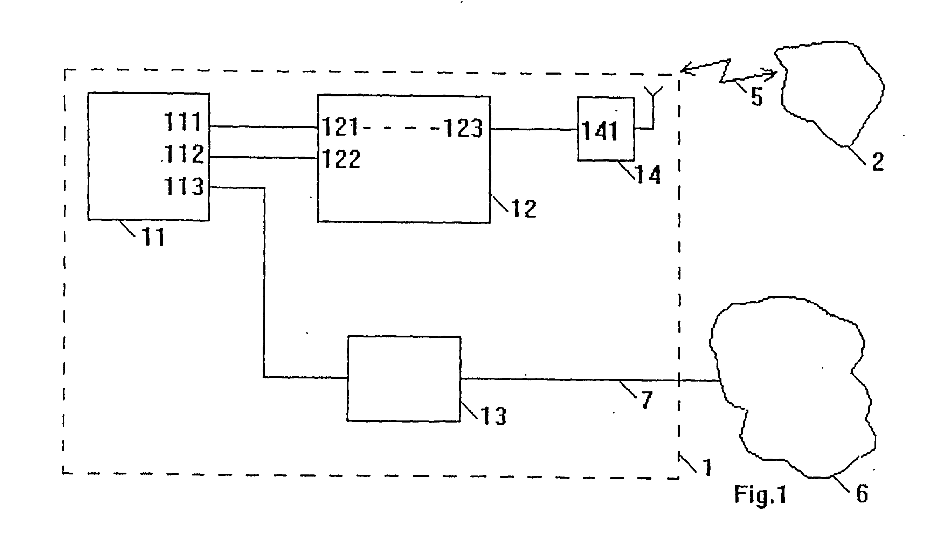

Die Testeinrichtung 1 zur Überprüfung der Leitweglenkung und der Gebührenerfassung in einem derartigen Mobilkommunikationsnetz 2 weist gemäß Figur 1 einen Steuerrechner 11, eine Multiplexereinrichtung 12 und einen Mobilteilnehmer 14 auf, wobei der Mobilteilnehmer 14 eine drahtgebundene Kommunikationsschnittstelle 141 aufweist. Beispielsweise verfügt das Gerät GH 198 der Fa. Ericsson neben der drahtlosen Funkschnittstelle 5 zum Mobilkommunikationsnetz 2 über eine drahtgebundene serielle Schnittstelle, über die das Betätigen aller Zifferntasten und der Befehlstasten emulierbar ist und über die der Status des Geräts auslesbar ist. Anstelle des einzufügenden Datenmoduls weist der Mobilteilnehmer 14 ein Adaptermodul auf, das elektrisch mit der Kommunikationsschnittstelle 141 verbunden ist.

Die Multiplexereinrichtung 12 ist zur Aufnahme und wechselweisen Bedienung einer Mehrzahl von Datenmodulen ausgestattet. Zweckmäßigerweise sind die in der Multiplexereinrichtung 12 bedienbaren Datenmodule in Heimatdatenbanken (HLR) verschiedener Vermittlungssysteme 21/1 und 21/2 registriert. Die Multiplexereinrichtung 12 weist eine Mobilteilnehmerschnittstelle 123 auf, die mit der Kommunikationsschnittstelle 141 des Mobilteilnehmers 14 verbunden ist. Darüber hinaus weist die Multiplexereinrichtung 12 eine serielle Schnittstelle 121 und eine parallele Schnittstelle 122 zur Kommunikation mit dem Steuerrechner 11 auf.

Der Steuerrechner 11 weist mindestens eine serielle Schnittstelle 111 und eine parallele Schnittstelle 112 auf, die typgerecht mit der seriellen Schnittstelle 121 und der parallelen Schnittstelle 122 der Multiplexereinrichtung 12 verbunden sind. Der Steuerrechner 11 ist dabei derart mit der Multiplexereinrichtung 12 verbunden, daß jeweils eines der Datenmodule in der Multiplexereinrichtung 12 selektiert ist und daß genau jenes selektierte Datenmodul im Mobilteilnehmer 14 über das Adaptermodul emuliert ist.

Der Steuerrechner 11 weist darüber hinaus für sich bekannte Speichermittel auf, in denen ein Programm geladen ist, das den Ablauf der einzelnen Testroutinen und deren Aufeinanderfolge bestimmt. Dazu ist der Steuerrechner 11 zumindest virtuell mit der drahtgebundenen Kommunikationsschnittstelle 141 des Mobilteilnehmers 14 verbunden.

Darüber hinaus weist der Steuerrechner 11 Mittel zur Protokollierung der Testroutinen und der während der Tests anfallenden Gebühren auf. Zweckmäßigerweise ist der Steuerrechner als für sich bekannter Personalcomputer ausgeführt.

Vorteilhafterweise sind mit einer derartig ausgestatteten Testeinrichtung bereits im Wege der Signalisierungsverkehrs die Abarbeitungsschritte der Leitweglenkung von und zu verschiedenen Vermittlungssystemen entsprechend der gewählten Rufnummer und der heimatlichen Registrierung der verwendeten Datenmodule effizient und vollständig in kurzer Zeit und zu beliebigen Zeiten prüfbar.

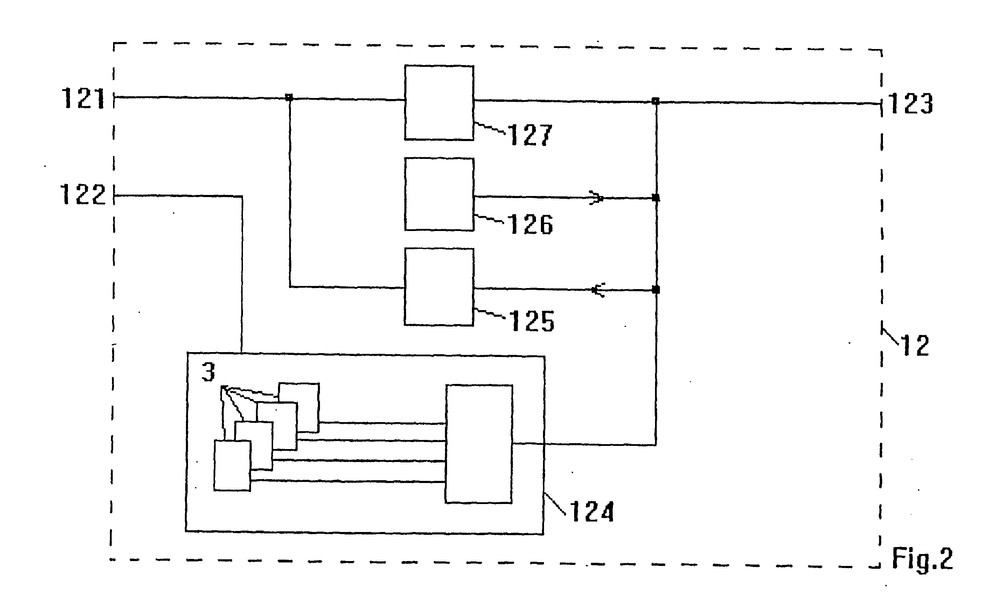

In Ausgestaltung der Erfindung weist die Multiplexereinrichtung 12 gemäß Figur 2 Mittel zur Signalumsetzung 127 von der seriellen Schnittstelle 111 des Steuerrechners 11, die mit der seriellen Schnittstelle 121 der Multiplexereinrichtung 12 verbunden ist, zu der drahtgebundenen Kommunikationsschnittstelle 141 des Mobilteilnehmers 14, die mit der Mobilteilnehmerschnittstelle 123 verbunden ist, auf. Vorteilhafterweise werden damit unterschiedliche Signalpegel zwischen dem Steuerrechner 11 und dem Mobilteilnehmer 14 überbrückt.

In weiterer Ausgestaltung der Erfindung ist die Multiplexereinrichtung 12 zum Sprachkanaltest für die Senderichtung mit einem NF-Generator 126 mit vorgegebener Testfrequenz und für die Empfangsrichtung mit einem auf diese vorgegebene Testfrequenz abgestimmten Frequenzdiskriminator 125 ausgestattet. Dabei sind der Ausgang des NF-Generators 126 und der Eingang des Frequenzdiskriminator 125 mit der Mobilteilnehmerschnittstelle 123 der Multiplexereinrichtung 12 verbunden.

Der Ausgang des Frequenzdiskriminators 125 ist mit der seriellen Schnittstelle 121 der Multiplexereinrichtung 12 verbunden. An diesem Ausgang ist das Vorliegen oder Fehlen der empfangenen Testfrequenz detektierbar.

Vorteilhafterweise sind mit diesen Mitteln neben der Überprüfung der Leitweglenkung auch Prüfungen des für die Sprachkommunikation erforderlichen Verkehrskanals möglich.

Weiterhin ist in Figur 2 ein Kartenleser 124 dargestellt, der geeignet ist, eine Mehrzahl von Datenmodulen 3 aufzunehmen und selektiv zu aktivieren. Der Kartenleser 124 ist steuerseitig mit der parallelen Schnittstelle 122 der Multiplexereinrichtung 12 und datenseitig mit der Mobilteilnehmerschnittstelle 123 verbunden.

In weiterer Ausgestaltung der Erfindung ist ein Modem 13 vorgesehen, das an eine serielle Schnittstelle 113 des Steuerrechners 11, siehe hierzu Figur 1, angeschlossen ist und über eine Anschlußleitung 7 mit einem vom Mobilkommunikationsnetz 2 unabhängigen zweiten Kommunikationsnetz 6 verbindbar ist. Als zweites Kommunikationsnetz 6 kann dabei ein Festnetz vorgesehen sein.

Vorteilhafterweise sind über das zweite Kommunikationsnetz 6 mehrere gleichartig aufgebaute Testeinrichtungen 1 unabhängig von Einrichtungen des zu testenden Mobilkommunikationsnetzes 2 hinsichtlich der jeweils vorgesehenen Testschritte aufeinander synchronisierbar.

Zur Überprüfung der Leitweglenkung innerhalb des Mobilkommunikationsnetzes 2 ist vorgesehen, daß die steckbaren Datenmodule 3 derselben Multiplexereinrichtung 12 jeweils in Heimatdatenbanken verschiedener Vermittlungssysteme 21/1 und 21/2 desselben Mobilkommunikationsnetzes 2 registriert sind.

In weiterer Ausgestaltung der Erfindung ist zur Überprüfung der Leitweglenkung zwischen verschiedenen Mobilkommunikationsnetzes 2 vorgesehen, daß die steckbaren Datenmodule 3 derselben Multiplexereinrichtung 12 jeweils in Heimatdatenbanken verschiedener Vermittlungssysteme 21/1 und 21/2 verschiedener Mobilkommunikationsnetze 2 registriert sind.

Beim Verbindungsaufbau wird in Abhängigkeit von dem selektierten Datenmodul 3 zunachst die Heimatdatenbank des Vermittlungssystems, bei dem das selektierte Datenmodul registriert ist, auf die Berechtigungen zum Netzzugang zum Mobilkommunikationsnetz 2 abgefragt. Unabhängig davon, ob das befragte Vermittlungssystem Bestandteil des Mobilkommunikationsnetzes 2, von dem der Verbindungsaufbau initiiert wird, ist, erfolgt ein Signalisierungsverkehr dessen Ablauf Rückschlüsse auf die Schritte der Leitweglenkung sowohl netzintem als auch netzübergreifend gestattet. In Abhängigkeit von der gewählten Rufnummer wird in darüber hinausgehendem Signalisierungsverkehr die Heimatdatenbank des Vermittlungssystems, in dem der gerufene Mobilteilnehmer registriert ist, angesprochen, das einen Zeiger auf das Vermittlungssystem zurückgibt, in dessen Einzugsbereich sich der gerufene Mobilteilnehmer aktuell befindet oder zuletzt befunden hat. In besonders vorteilhafter Weise kann dabei sowohl das Vermittlungssystem, das die Heimatdatenbank des gerufenen Mobilteilnehmers umfaßt, als auch das Vermittlungssystem, in dessen Einzugsbereich sich der Mobilteilnehmer befindet oder zuletzt befunden hat, sowohl innerhalb als auch außerhalb des Mobilkommunikationsnetzes 2 befinden, von dem der Verbindungsaufbau initiiert wird.

Mit anderen Worten ist in dieser Ausgestaltung auch die Funktion des sogenannten "international roaming" prüfbar, bei dem regelmäßig national begrenzte Mobilkommunikationsnetze 2 verlassen werden. Dabei kann sowohl die Rufinitialisierung von einem fremden Mobilkommunikationsnetz ausgehend an einen Mobilteilnehmer im zu prüfenden Mobilkommunikationsnetz 2 gerichtet sein, als auch von dem zu prüfenden Mobilkommunikationsnetz 2 ausgehend an einen Mobilteilnehmer in einem fremden Mobilkommunikationsnetz gerichtet sein. Dabei kann sowohl der rufende als auch der gerufene Mobilteilnehmer in dem zu prüfenden Mobilkommunikationsnetz 2 registriert sein, aber sich aktuell im Einzugsbereich eines fremden Mobilkommunikationsnetzes aufhalten.

In weiterer Ausgestaltung der Erfindung ist vorgesehen, daß der Steuerrechner 11 mit einem Programm zur Selektion jeweils eines der Datenmodule 3, zur Abarbeitung einer datenmodulspezifizierbaren Folge vordefinierter Befehle zur ferngesteuerten Bedienung des Mobilteilnehmers 14, zur Erfassung und Protokollierung der einzelnen, durch die Befehle absolvierten Testschritte und zur Erfassung und Protokollierung der durch die Abarbeitung der einzelnen Testschritte verursachten Gebühren ausgestattet ist. Zweckmäßigerweise umfaßt der Befehlsvorrat dabei mindestens:
a) einen Befehl, mit dem der Mobilteilnehmer eingeschaltet sowie der Initialisierungsvorgang mit einem selektierten Datenmodul 3 angestoßen und überwacht wird,
b) einen Befehl, der den Gesprächsaufbau von Mobilteilnehmer 14 der Testeinrichtung 1 zu einer vorgebbaren Testrufnummer startet, für eine vorgegebene Dauer hält und überwacht,
c) einen Befehl zur Initiierung einer Verbindung vom Mobilteilnehmer 14 der Testeinrichtung 1 zu einem vorgebbaren Mobilteilnehmer 14, der Bestandteil einer gleichartig aufgebauten zweiten Testeinrichtung 1', ist,
d) einen Befehl zum Aufbau einer Verbindung zwischen dem Mobilteilnehmer 14 der Testeinrichtung 1 zum Modem 13 einer zweiten Testeinrichtung 1',
e) einen Befehl zum Aufbau einer Verbindung zwischen dem Modem 13 der Testeinrichtung 1 zum Mobilteilnehmer 14 einer vorgebbaren zweiten Testeinrichtung 1'.

Darüber hinaus können Befehle zur Kommunikation zwischen den Modems 13 der Testeinrichtungen 1 und 1' vorgesehen sein. Weiterhin kann vorgesehen sein, daß das Programm Mittel zum ereignisgesteuerten Empfang von Synchronisationsbefehlen und Leitweginformationen und deren Protokollierung umfaßt. Im einzelnen kann dazu vorgesehen sein, daß die den Testvorgang initiierende Testeinrichtung 1 über einen Verbindungsweg im alternativen Kommunikationsnetz 6 eine vorgebbare andere Testeinrichtung 1' über einen Anruf darauf vorbereitet, daß in einem vorgegebenen Zeitfenster ein Verbindungsaufbau von einer bestimmten Testeinrichtung aus vorgenommen wird.

Neben Testvorgängen, die sich im wesentlichen auf den Austausch von Signalisierungsinformationen zwischen einer Testeinrichtung 1 und einem oder mehreren der Vermittlungssysteme 21/1 und 21/2 beziehen, werden mit dem Gegenstand der Erfindung Testvorgänge ermöglicht, die zwischen zwei Endeinrichtungen ausgeführt werden. Dazu werden mindestens zwei gleichartige Testeinrichtungen 1 und 1' vorgesehen, die wechselweise als Master 1 und Slave 1' betrieben werden, wobei der jeweilige Master 1 die den jeweiligen Testvorgang initialisierende Einrichtung und jeder Slave 1' eine auf den Testvorgang wartende und reagierende Einrichtung ist. Im einzelnen ist dabei vorgesehen, daß in der jeweiligen Mastereinrichtung 1 die Datenmodule 3 aufeinanderfolgend selektiert und aktiviert werden, wobei das selektierte und aktivierte Datenmodul im Mobilteitnehmer 14 emuliert wird. Für jedes Datenmodul wird eine vorgebbare Folge vordefinierter Anweisungen an den Mobilteilnehmer 14 gerichtet, in dem die Anweisungen in adäquate Kommunikationsaktionen mit Einrichtungen des Mobilkommunikationsnetzes 2 umgesetzt werden. Dazu werden über die Funkschnittstelle 5 Informationen mit einem der Basisstationssysteme 22/1 bis 22/4 ausgetauscht, die jeweils mit einem der Vermittlungssysteme 21/1 oder 21/2 verbunden sind. Darüber hinaus werden in der jeweiligen Mastereinrichtung 1 jede der vorgegebenen Kommunikationsaktionen zusammen mit der zugehörigen Reaktion jeder Slaveeinrichtung 1' protokolliert.

In jeder Slaveeinrichtung 1' wird jede masterseitig verlangte Kommunikationsanforderung entsprechend vordefinierter Anweisungsfolgen ausgeführt und jede masterseitig verlangte Kommunikationsanforderung zusammen mit der zugehörigen eigenen Reaktion protokolliert.

In vorteilhafter Weise ergibt sich aus der zweiseitigen Protokollierung sowohl auf seiten der jeweiligen Mastereinrichtung 1 als auch auf seiten der jeweiligen Slaveeinrichtung 1', daß auftretende Fehler während jeder einzelnen Testprozedur transparent werden, indem die im fehlerfreien Fall identischen Protokolle auf Abweichungen verglichen werden.

Darüber hinaus kann vorgesehen sein, daß jede an einem Testvorgang beteiligte Slaveeinrichtung 1' durch die jeweilige Mastereinrichtung 1 auf die Kommunikationsanforderungen des Testvorganges synchronisiert wird.

Im einzelnen kann dabei vorgesehen sein, die vorgesehene Slaveeinrichtung 1' zu aktivieren, auf einen eingehenden Anruf vorzubereiten und in einen Schlummerzustand zu versetzen, wobei der tatsächlich eingehende Anruf die beteiligte Slaveeinrichtung 1' aus dem Schlummerzustand in den aktiven Zustand versetzt.

Dabei kann im weiteren vorgesehen sein, daß diese Synchronisation der an einem Testvorgang beteiligten Testeinrichtungen 1 und 1' über ein zweites, vom zu testenden Mobilkommunikationsnetz 2 unabhängiges Kommunikationsnetz 6 durchgeführt wird. Dabei kann vorgesehen sein, daß die Synchronisation über eine Modemverbindung geschaltet wird. Ausgehend vom Modem 13 der Mastereinrichtung 1 wird dabei über eine Festnetzanschlußleitung 7 eine Verbindung mit dem Festnetz 6 hergestellt, das aus einer Mehrzahl untereinander verbundener Festnetivermittlungsstellen 61/1 und 61/2 aufgebaut ist und über eine weitere Festnetzanschlußleitung 7' wird eine Verbindung des Modems 13 der Slaveeinrichtung 1' mit dem Festnetz 6 hergestellt.

In weiterer Ausgestaltung der Erfindung kann vorgesehen sein, daß nach Ablauf des Testvorganges die in jeder Testeinrichtung 1 und 1' protokollierten Gebührendaten mit den in dem Vermittlungssystem 21/1 und 21/2 des Mobilkommunikationsnetzes 2 umfaßten Gebührendaten verglichen werden. Darüber hinaus ist vorgesehen, daß nach Ablauf des Testvorganges die in der Mastereinrichtung 1 protokollierten Testschritte mit denen der in den beteiligten Slaveeinrichtungen 1' protokollierten Testschritten verglichen werden.

Nachstehend werden die mit der oben beschriebenen Testeinrichtung durchführbaren Testvorgänge im einzelnen unter Bezugnahme auf Figur 3 näher beschrieben.

Ein erster Testvorgang ist darauf ausgerichtet, den Mobilteilnehmer 14 jeweils unter Emulation eines der Datenmodule im Mobilkommunikationsnetz 2 bekanntzumachen. Dazu wird in der Master-Testeinrichtung 1 programmgesteuert nacheinander jeweils eines der Datenmodule selektiert, aktiviert und im Mobilteilnehmer emuliert. Dazu wird der Mobilteilnehmer ferngesteuert eingeschaltet, der sodann beginnt, über die Funkschnittstelle 5 mit dem nächstgelegenen Basisstationssystem 22/1 zu kommunizieren. Dabei wird das Signalisierungsprotokoll der Funkschnittstelle 5 überprüft. Im weiteren wird aus den vom emulierten Datenmodul übertragenen Daten das Vermittlungssystem ermittelt, in dessen Heimatdatenbank (HLR) das Datenmodul registriert ist. Dabei werden die Signalisierungsprotokolle zwischen dem über die Funkschnittstelle 5 angesprochenem Basisstationssystem 22/1 und dem angeschlossenen Vermittlungssystemen 21/1 und 21/2 überprüft. Darüber hinaus wird die Funktionsweise der Leitweglenkung zu dem Vermittlungssystem überprüft, in dessen Heimatdatenbank das emulierte Datenmodul registriert ist.

Beim bestimmungsgemäßen Gebrauch des Mobilkommunikationsnetzes 2 werden diese Prozeduren bei jedem sogenannten "location update" durchgeführt, bei dem der aktuelle Aufenthaltsort eines mit einem bestimmten Datenmodul ausgestatteten Mobilteilnehmers aktualisiert und in der Besucherdatenbank (VLR) des Vermittlungssystems, in dessen Einzugsbereich sich der Mobilteilnehmer aktuell befindet, verwaltet wird. Darüber hinaus wird in der Heimatdatenbank (HLR) des Vermittlungssystems, in der das Datenmodul registriert ist, ein Zeiger auf das Vermittlungssystem hinterlegt, in dem sich der Mobilteilnehmer aktuell aufhält.

In einem zweiten Testvorgang ist vorgesehen, eine Verbindung zwischen zwei Mobilteilnehmern herzustellen. Dabei wird unterschieden, ob die Rufinitialisierung vom Mobilteilnehmer der Master-Testeinrichtung 1 oder der Slave-Testeinrichtung 1' ausgehen soll.

In einer ersten Variante wird der Ruf ausgehend von der Master-Testeinrichtung 1 initiiert. Dabei wird unter Emulation eines beliebigen Datenmoduls im Mobilteilnehmer der Master-Testeinrichtung 1, durch den Steuerrechner initiiert, die Rufnummer, die zu einem der Datenmodule in der Slave-Testeinrichtung 1' gehört, gewählt. Wesentlicher Bestandteil dieses Testvorganges ist die Rufnummernanalyse in dem Vermittlungssystem 21/1, in dessen Einzugsbereich sich die Master-Testeinrichtung 1 befindet, und die Leitweglenkung von diesem Vermittlungssystem 21/1 zu dem Vermittlungssystem 21/2, in dessen Einzugsbereich sich die gerufenen Slave-Testeinrichtung 1' befindet.

In einer zweiten Variante wird der abgehende Ruf von der Slave-Testeinrichtung 1' initiiert. Dazu wird die Slave-Testeinrichtung 1' von der Master-Testeinrichtung 1 zum Ablauf des Testvorganges aufgefordert, wobei diese Aufforderung über einen alternativen Verbindungsweg erfolgen kann und Bestandteil der oben beschriebenen Synchronisation zwischen den Testeinrichtungen 1 und 1' ist. Bei analoger Vorgehensweise wird in dieser Variante des Testvorganges die Rufnummemanalyse in dem der Slave-Testeinrichtung 1' zugeordneten Vermittlungssystem 21/2 sowie die Leitweglenkung von dem Vermittlungssystem 21/2 zu dem Vermittlungssystem 21/1, in dessen Einzugsbereich sich die Master-Testeinrichtung 1 befindet, überprüft.

Der alternative Verbindungsweg wird dabei über das Festnetz 6 geführt, wobei das Modem der Master-Testeinrichtung 1 über eine Festnetzanschlußleitung 7 mit Festnetzvermittlungsstelle 61/1 verbunden ist und das Modem der Slave-Testeinrichtung 1' über eine andere Festnetzanschlußleitung 7' mit einer zweiten Festnetzvermittlungsstelle 61/2 verbunden ist. Die Festnetzvermittlungsstellen 61/1 und 61/2 sind im Festnetz 6 netztypisch miteinander verbunden.

Ein weiterer Prüfkomplex betrifft die Herstellung von Verbindungen zwischen einem Mobilteilnehmer und einem Festnetzteilnehmer. Dabei wird der Festnetzteilnehmer durch das Modem in der jeweiligen Testeinrichtung 1 und 1' dargestellt. Im einzelnen sind in diesem Komplex vier Varianten konfigurierbar:
Variante A: Mobilteilnehmer - Master an Modem - Slave
Variante B: Modem - Master an Mobilteilnehmer - Slave
Variante C: Mobilteilnehmer - Slave an Modem - Master
Variante D: Modem - Slave an Mobilteilnehmer - Master

Dabei werden die Testvorgänge nach den Varianten A und B direkt durch die Master-Testeinrichtung 1 initiiert und ausgeführt. Die Testvorgänge nach den Varianten C und D werden ausgehend von der Master-Testeinrichtung 1 über den oben beschriebenen alternativen Verbindungsweg in der Slave-Testeinrichtung 1' initiiert und von der Slave-Testeinrichtung 1' auftragsgemäß ausgeführt.

Darüber hinausgehende Testkonfigurationen, wie beispielsweise Mobilteilnehmer ruft Modem der eigenen Testeinrichtung 1 oder 1' und umgekehrt, werden hinsichtlich der prüfbaren Signalisierungsprotokolle und Leitweglenkungen in vorteilhafter Weise durch die Testvorgänge nach den Varianten A bis D mit abgedeckt und brauchen daher nicht separat geprüft zu werden.

Im weiteren wird stellvertretend für diesen Prüfkomplex der Testvorgang nach Variante A beschrieben. Die Testvorgänge nach den Varianten B bis D erfolgen völlig analog bei jeweils komplementären Netzeintrittspunkten sowie Rufrichtungen, wobei dieselben Protokollinstanzen des jeweils anderen Vermittlungssystems 21/1 oder 21/2 geprüft werden.

Beim Verbindungsaufbau von Mobilteilnehmern der Master-Testeinrichtung 1 zum Modem der Slave-Testeinrichtung 1' gemäß Variante A wird mit einem beliebigen Datenmodul der.Master-Testeinrichtung 1 die Rufnummer, die der Festnetzanschlußleitung 7' des Festnetzes 6 zugeordnet ist, gewählt. Dabei wird in dem Vermittlungssystem 21/1 aus der gewählten Rufnummer die Leitweginformation ermittelt, wonach der Ruf an genau das Vermittlungssystem 21/2 weiterzuleiten ist, das über einen Festnetzzugang 72 direkt mit genau der Festnetzvermittlungsstelle 61/2 des Festnetzes 6 verbunden ist, mit der das gerufene Modem der Slave-Testeinrichtung 1' über die Festnetzanschlußleitung 7' verbunden ist. Dabei werden die Rufnummernanalyse in den Vermittlungssystemen 21/1 und 21/2 sowie die Leitweglenkung innerhalb des Mobilkommunikationsnetzes 2 und die netzübergreifende Leitweglenkung vom Mobilkommunikationsnetz 2 zum Festnetz 6 überprüft. Darüber hinaus werden die Signalisierungsprotokolle innerhalb des Mobilkommunikationsnetzes 2 sowie der Anwenderteil für das Femsprechen in Bezug auf die Kommunikation zwischen dem Mobilkommunikationsnetz 2 und dem Festnetz 6 geprüft.

Die o. g. Signalisierungsprotokolle sind in der eingangs erwähnten Veröffentlichung beschrieben und bedürfen daher als solche keiner weiteren Erläuterung.

Darüber hinaus ist vorgesehen, bei Verbindungen zwischen Mobilteilnehmern die Funktionsfähigkeit des Sprachkanals zu testen, der unabhängig vom Signalisierungskanal betrieben wird. Dazu wird bei bestehender Verbindung ein Tonsignal des NF-Generators 126 gesendet, das im Frequenzdiskriminator 125 der jeweiligen Gegenstelle selektiert wird. Dabei wird getestet, ob die Verbindungsleitungen zwischen den Einrichtungen des Mobilkommunikationsnetzes 2, also den Vermittlungssystemen 21/1 und 21/2 untereinander sowie zwischen den Vermittlungssystemen 21/1 und 21/2 und den jeweils angeschlossenen Basisstationssystemen 22/1 bis 22/4, exakt angeschlossen sind, da beispielsweise beim Vertauschen der paarigen Leitungsenden eine Sprachkommunikation nicht zustande kommt.

Alle Testvorgänge sind als konfigurierbare Programmstapel, die aus Befehlsmodulen entsprechend dem vorgesehenen Testablauf zusammengesetzt sind, aufgebaut. Die einzelnen Befehlsmodule sind in auf dem Steuerrechner 11 direkt ausführbare Programmdateien realisiert.

## Patentansprüche

1. Testeinrichtung zur Überprüfung der Leitweglenkung und Gebührenerfassung in einem Mobilkommunikationsnetz, das im wesentlichen aus einer Mehrzahl untereinander vernetzter Vermittlungssysteme, an die Basisstationssysteme anschließbar sind, und einer Mehrzahl Mobilteilnehmer besteht, wobei
- die Mobilteilnehmer mit mindestens einem Basisstationssystem in Funkverbindung zu treten ausgerüstet sind,
- die Vermittlungssysteme zumindest aus einer Vermittlungseinrichtung und einer Mehrzahl von Datenbanken zur Verwaltung von Mobilteilnehmerdaten bestehen,
- jeder Mobilteilnehmer mit einem kartenartigen Datenmodul ausgestattet ist, dessen Daten in einer Datenbank einer der Vermittlungssysteme zumindest teilweise gespeichert sind,
**dadurch gekennzeichnet,**
- **daß** mindestens ein mit einer drahtgebundenen Kommunikationsschnittstelle (141) ausgestatteter Mobilteilnehmer (14), eine Multiplexereinrichtung (12) zur Aufnahme und wechselweisen Bedienung einer Mehrzahl von Datenmodulen (3) und ein Steuerrechner (11) vorgesehen sind,
- **daß** der Mobilteilnehmer (14) anstelle des Datenmoduls ein Adaptermodul aufweist, das mit der Multiplexereinrichtung (12) derart verbunden ist, daß in Abhängigkeit vom Schaltzustand der Multiplexereinrichtung (12) eines der Datenmodule (3) in dem Mobilteilnehmer (14) emuliert ist,
- **daß** der Steuerrechner (11) mit der Multiplexereinrichtung (12) derart verbunden ist, daß jeweils eines der Datenmodule (3) selektierbar ist und
- **daß** der Steuerrechner (11) zumindest virtuell mit der drahtgebundenen Kommunikationsschnittstelle (141) des Mobilteilnehmers (14) verbunden ist.

2. Testeinrichtung nach Anspruch 1
**dadurch gekennzeichnet,**
**daß** die Multiplexereinrichtung (12) Mittel zur Signalumsetzung (127) von einer Kommunikationsschnittstelle (111) des Steuerrechners (11) zu der drahtgebundenen Kommunikationsschnittstelle (141) des Mobilteilnehmers (14) aufweist.

3. Testeinrichtung nach einem der Ansprüche 1 und 2
**dadurch gekennzeichnet,**
**daß** die Multiplexereinrichtung (12) zum Sprachkanaltest für die Senderichtung einen NF-Generator (126) mit vorgegebener Testfrequenz und für die Empfangsrichtung einen auf die vorgegebene Testfrequenz abgestimmten Frequenzdiskriminator (125) umfaßt.

4. Testeinrichtung nach Anspruch 3
**dadurch gekennzeichnet,**
**daß** der Ausgang des NF-Generators (126) und der Eingang des Frequenzdiskriminator (125) mit der drahtgebundenen Kommunikationsschnittstelle (141) des Mobilteilnehmers (14) verbunden sind.

5. Testeinrichtung nach einem der Ansprüche 1 bis 4
**dadurch gekennzeichnet,**
**daß** ein Modem (13) vorgesehen ist, das an eine Kommunikationsschnittstelle (113) des Steuerrechners (11) angeschlossen ist und über eine Anschlußleitung (7) mit einem vom Mobilkommunikationsnetz (2) unabhängigen zweiten Kommunikationsnetzes (6) verbindbar ist.

6. Testeinrichtung nach Anspruch 5
**dadurch gekennzeichnet,**
**daß** das zweite Kommunikationsnetz (6) ein Festnetz ist.

7. Testeinrichtung nach einem der Ansprüche 1 bis 6
**dadurch gekennzeichnet,**
**daß** die steckbaren Datenmodule (3) derselben Multiplexereinrichtung (12) jeweils in Datenbanken verschiedener Vermittlungssysteme (21/1, 21/2) desselben Mobilkommunikationsnetzes (2) registriert sind.

8. Testeinrichtung nach einem der Ansprüche 1 bis 6
**dadurch gekennzeichnet,**
**daß** die steckbaren Datenmodule (3) derselben Multiplexereinrichtung (12) jeweils in Datenbanken verschiedener Vermittlungssysteme (21/1, 21/2) verschiedener Mobilkommunikationsnetze (2) registriert sind.

9. Testeinrichtung nach einem der Ansprüche 1 bis 8
**dadurch gekennzeichnet,**
**daß** der Steuerrechner (11) mit einem Programm
- zur Selektion jeweils eines der Datenmodule (3),
- zur Abarbeitung einer datenmodulspezifizierbaren Folge vordefinierter Befehle zur femgesteuerten Bedienung des Mobilteilnehmers (14),
- zur Erfassung und Protokollierung der einzelnen durch die Befehle absolvierten Testschritte und
- zur Erfassung und Protokollierung der durch die Abarbeitung der einzelnen Testschritte verursachten Gebühren
ausgestattet ist.

10. Testeinrichtung nach Anspruch 9
**dadurch gekennzeichnet,**
**daß** das Programm vordefinierte Befehle zur Steuerung des Modems (13) umfaßt.

11. Testeinrichtung nach einem der Ansprüche 9 und 10
**dadurch gekennzeichnet,**
**daß** das Programm Mittel zum ereignisgesteuerten Empfang von Synchronisationsbefehlen und Leitweginformationen und deren Protokollierung umfaßt.

12. Verfahren das zum Betrieb der Testeinrichtung nach einem der Ansprüche 1 bis 11 geeignet ist, wobei für jeden Testvorgang mindestens zwei gleichartige Testeinrichtungen (1, 1') vorgesehen sind, die wechselweise als Master (1) und Slave (1') betrieben werden, wobei der jeweilige Master (1) die den jeweiligen Testvorgang initialisierende Einrichtung und jeder Slave (1') eine auf den Testvorgang wartende und reagierende Einrichtung ist,
**dadurch gekennzeichnet,**
- **daß** in der jeweiligen Mastereinrichtung (1)
- Datenmodule (3) aufeinanderfolgend selektriert und aktiviert werden, wobei das selektierte und aktivierte Datenmodul (3) in einen Mobilteilnehmer (14) emuliert wird,
- für jedes Datenmodul (3) eine vorgebbare Folge vordefinierter Anweisungen an den Mobilteilnehmer (14) gerichtet wird, in dem die Anweisungen in adäquate Kommunikationsaktionen mit Einrichtungen (21/1, 22/1) des Mobilkommunikationsnetzes (2) umgesetzt werden,
- jede vorgegebene Kommunikationsaktion zusammen mit der zugehörigen Reaktion jeder Slaveeinrichtung (1')protokolliert wird und
- **daß** in jeder Slaveeinrichtung (1')
- jede masterseitig verlangte Kommunikationsanforderung entsprechend vordefinierter Anweisungsfolgen ausgeführt wird und
- jede masterseitig verlangte Kommunikationsanforderung zusammen mit der zugehörigen eigenen Reaktion protokolliert wird.

13. Verfahren nach Anspruch 12
**dadurch gekennzeichnet,**
**daß** jede an einem Testvorgang beteiligte Slaveeinrichtung (1') durch die jeweilige Mastereinrichtung (1) auf die Kommunikationsanforderungen des Testvorganges synchronisiert wird.

14. Verfahren nach Anspruch 13
**dadurch gekennzeichnet,**
**daß** die Synchronisation der an einem Testvorgang beteiligten Testeinrichtungen (1, 1') über ein zweites, vom zu testenden Mobilkommunikationsnetz (2) unabhängiges Kommunikationsnetz (6) durchgeführt wird.

15. Verfahren nach Anspruch 14
**dadurch gekennzeichnet,**
**daß** die Synchronisation über eine Modemverbindung (13, 7, 6, 7', 13) geschaltet wird.

16. Verfahren nach einem der Ansprüche 12 bis 15
**dadurch gekennzeichnet,**
**daß** nach Ablauf des Testvorganges die in jeder Testeinrichtung (1, 1') protokollierten Gebührendaten mit den in den Vermittlungssystemen (21/1, 21/2) des Mobilkommunikationsnetzes (2) erfaßten Gebührendaten verglichen werden.

17. Verfahren nach einem der Ansprüche 12 bis 15
**dadurch gekennzeichnet,**
**daß** nach Ablauf des Testvorganges die in der Mastereinrichtung (1) protokollierten Testschritte mit denen der in den beteiligten Slaveeinrichtungen (1') protokollierten verglichen werden.

## Claims

1. Testing device for testing the forwarding of calls and the registration of fees in a mobile communication network, which essentially comprises a plurality of switching systems connected by networks and connectable to the base station systems, and comprising a plurality of mobile subscribers, wherein
- the mobile subscribers are able to build up a wireless connection to at least one base station system;
- the switching systems comprise at least one switching device and a plurality of data bases for administration of mobile subscriber data;
- every mobile subscriber has a data module in the form of a card or the like; wherein the data of said data module are at least in part stored in a data base of one of the said switching systems;
**characterized in**
- **that** at least one mobile subscriber (14) with a wire based communication interface (141); a multiplexing device (12) for receipt of and alternatingly serving a plurality of data modules (3) and a controlling computer (11) are provided;
- wherein the mobile subscriber (14) is provided with an adapter module instead of the data module; wherein the adapter module is connected with a multiplexing device (12) in a way that allows emulation of one of the data modules (3) in the mobile subscriber (14) depending on the switching state of the multiplexing device (12);
- **that** the controlling computer (11) is connected with a multiplexing device (12) in a way that allows selecting one of the data modules (3) and
- **that** the controlling computer (11) is at least virtually connected to the wire based communication interface (141) of the mobile subscriber (14).

2. Testing device according to claim 1, **characterized in that**
the multiplexing device (12) comprises means (127) for signal transport from one communication interface (111) of the controlling computer (11) to the wire based communication interface (141) of the mobile subscriber (14).

3. Testing device according to one of the claims 1 or 2, **characterized in that**
the multiplexing device (12) comprises an NF-generator (126) with the preset testing frequency and a frequency distinguisher (125) adapted to the preset testing frequency for the receiving device thus allowing speach channel testing.

4. Testing device according to claim 3, **characterized in that**
the exit of the NF-generator (126) and the entrance of the frequency distinguisher (125) are connected with a wire based communication interface (141) of the mobile subscriber (14).

5. Testing device according to one of the claims 1 to 4, **characterized in that**
a modem (13) is provided which is connected to a communication interface (113) of the controlling computer (11) and which is connectable to a second communication network (6) that is independent of the mobile communication network (2) by a connecting line (7).

6. Testing device according to claim 5, **characterized in that**
the second communication network is a wire based network (= cable network).

7. Testing device according to one of the claims 1 to 6, **characterized in that**
the plug-in data modules (3) of one multiplexing device (12) are registered in data bases of different switching systems (21-1; 21-2) of one mobile communication network.

8. Testing device according to one of the claims 1 to 6; **characterized in that**
the plug-in data modules (3) of the same multiplexing device (12) are registered in different switching systems (21-1; 21-2) of different mobile communication networks.

9. Testing device according to one of the claims 1 to 8, **characterized in that**
the controlling computer (11) comprises a program
- for selecting respectively one of the data modules (3);
- for processing a sequence of predefined commands for remote control of the mobile subscriber (14) which commands are adapted to data modules;
- for registrating and recording the testing steps defined by the commands and
- for registrating and recording the fees caused by the respective testing steps.

10. Testing device according to claim 9; **characterized in that**
the program comprises predefined commands for controlling the modem (13).

11. Testing device according to one of the claims 9 or 10; **characterized in that**
the program comprises means for an event-based receipt of synchronisation commands and call forwarding information and saving those.

12. Method which is suitable for the operation of the testing device according to one of the claims 1 to 11, wherein for each testing process there are provided at least two similar testing devices (1; 1'), that are alternated as master (1) and slave (1'); wherein the respective master (1) is the device initializing the respective testing procedure; and every slave (1) is a device awaiting and reacting to the testing procedure **characterized in that**
in the respective master device (1)
- data modules (3) are succeedingly selected and activated; wherein the selected and activated data module (3) is emulated in a mobile subscriber (14);
- for every data module (3) a preset sequence of predefined commands to the mobile subscriber (14) is omitted; wherein the commands are changed into adequate communication actions with the devices (21-1; 22-1) of the mobile communication network (2);
- wherein each predefined communication action is saved as a protocol together with a respective reaction of every slave device (1') and
that in every slave device (1')
- every communication request requested by a master is executed according to predefined command sequences and
- every communication request requested by a master is saved as a protocol together with a respective own reaction.

13. Method according to claim 12, **characterized in that**,
every slave device (1') participating in the testing procedure is synchronized by the respective master device (1) upon communication request of the testing procedure.

14. Method according to claim 13, **characterized in that**,
the synchronization of the testing devices (1; 1') participating in the testing procedure is carried out by a second communication network (6) which communication network is independent of the mobile communication network (2) to be tested.

15. Method according to claim 14, **characterized in that**,
the synchronization is switched by a modem connection (13; 7; 6; 7'; 13).

16. Method according to one of the claims 12 to 15, **characterized in that**
after the end of the testing procedure charging data that are saved as a protocol in every testing device (1, 1') are compared to charging data that are taken by the switching system (21-1; 21-2) of the mobile communication network (2).

17. Method according to one of the claims (12) to 15, **characterized in that**
after the end of a testing procedure the testing steps saved by the master device (1) as a protocol are compared to those saved by the participating slave devices (1').

## Revendications

1. Appareil de test pour examiner le routage et la taxation dans un réseau de communication mobile qui est composé principalement d'une pluralité de systèmes de commutation connectés entre eux en réseau, auxquels peuvent être raccordés des systèmes de station de base, et une pluralité d'abonnés mobiles, sachant que
- les abonnés mobiles sont équipés d'au moins un système de station de base pour entrer en liaison radio,
- les systèmes de commutation sont composés d'au moins un appareil de commutation et d'une pluralité de bases de données pour la gestion des données d'abonnés mobiles,
- chaque abonné mobile est équipé d'un module de données de type carte, dont les données sont enregistrées au moins partiellement dans une base de données d'un des systèmes de commutation,
**caractérisé en ce que**,
- au moins un abonné mobile (14) équipé d'une interface de communication (141) sur fil, un appareil de multiplexage (12) pour la réception et la commande alternative d'une pluralité de modules de données (3) et un calculateur de commande (11) sont prévus,
- l'abonné mobile (14) comprend à la place du module de données un module adaptateur qui est relié à l'appareil de multiplexage (12), de telle sorte qu'en fonction de l'état de commutation de l'appareil de multiplexage (12), un des modules de données (3) est émulé dans l'abonné mobile (14),
- le calculateur de commande (11) est relié à l'appareil de multiplexage (12), de telle sorte qu'un des modules de données (3) peut être sélectionné à chaque fois, et
- **en ce que** le calculateur de commande (11) est relié au moins virtuellement à l'interface de communication (141) sur fil de l'abonné mobile (14).

2. Appareil de test selon la revendication 1
**caractérisé en ce que**,
l'appareil de multiplexage (12) comprend des moyens de conversion des signaux (127) d'une interface de communication (111) du calculateur de commande (11) à l'interface de communication (141) sur fil de l'abonné mobile (14).

3. Appareil de test selon une des revendications 1 et 2
**caractérisé en ce que**,
l'appareil de multiplexage (12) en vue du test de canal vocal comprend pour la direction d'émission un générateur basse fréquence (126) avec fréquence de test prédéfinie, et pour la direction de réception un discriminateur de fréquence (125) accordé sur la fréquence de test prédéfinie.

4. Appareil de test selon la revendication 3
**caractérisé en ce que**,
la sortie du générateur basse fréquence (126) et l'entrée du discriminateur de fréquence (125) sont reliées à l'interface de communication (141) sur fil de l'abonné mobile (14).

5. Appareil de test selon une des revendications 1 à 4,
**caractérisé en ce que**,
il est prévu un modem (13) qui est raccordé à une interface de communication (113) du calculateur de commande (11), et peut être relié via une ligne d'abonné (7) à un second réseau de communication (6) indépendant du réseau de communication mobile (2).

6. Appareil de test selon la revendication 5,
**caractérisé en ce que**,
le second réseau de communication (6) est un réseau fixe.

7. Appareil de test selon une des revendications 1 à 6,
**caractérisé en ce que**,
les modules de données (3) enfichables du même appareil de multiplexage (12) sont enregistrés à chaque fois dans les bases de données de différents systèmes de commutation (21/1, 21/2) du même réseau de communication mobile (2).

8. Appareil de test selon une des revendications 1 à 6,
**caractérisé en ce que**,
les modules de données (3) enfichables du même appareil de multiplexage (12) sont enregistrés à chaque fois dans les bases de données de différents systèmes de commutation (21/1, 21/2) de différents réseaux de communication mobile (2).

9. Appareil de test selon une des revendications 1 à 8,
**caractérisé en ce que**,
le calculateur de commande (11) est conçu avec un programme
- de sélection à chaque fois d'un des modules de données (3),
- de prise en charge d'une suite, pouvant être spécifiée par le module de données, d'instructions prédéfinies en vue du contrôle télécommandé de l'abonné mobile (14),
- de saisie et de traçage des différentes étapes de test accomplies par les instructions et
- de saisie et de traçage des taxations provoquées par la prise en charge des différentes étapes de test.

10. Appareil de test selon la revendication 9,
**caractérisé en ce que**,
le programme comprend des instructions prédéfinies de commande du modem (13).

11. Appareil de test selon une des revendications 9 et 10,
**caractérisé en ce que**,
le programme comprend des moyens de réception, commandée par l'événement, des instructions de synchronisation et des informations de routage et leur traçage.

12. Procédé adapté au fonctionnement de l'appareil de test selon une des revendications 1 à 11, sachant que pour chaque procédure de test au moins deux appareils de test (1, 1') de même type sont prévus, qui sont utilisés alternativement comme maître (1) et esclave (1'), le maître respectif (1) étant l'appareil initialisant chaque procédure de test, et l'esclave respectif (1') étant un appareil en attente de la procédure de test et réagissant à celle-ci,
**caractérisé en ce que**,
dans chaque appareil maître (1)
- des modules de données (3) sont sélectionnés et activés successivement, le module de données (3) sélectionné et activé étant émulé dans un abonné mobile (14),
- pour chaque module de données (3) une suite prédéfinissable d'instructions prédéfinies est adressée à chaque abonné mobile (14), dans lequel les instructions sont transformées en actions de communication adéquates avec les appareils (21/1, 22/1) du réseau de communication mobile (2),
- chaque action de communication prédéfinie est tracée conjointement avec la réaction correspondante de chaque appareil asservi (1') et
**en ce que** dans chaque appareil asservi (1')
- chaque exigence de communication demandée de la part du maître est réalisée en fonction des suites d'instructions prédéfinies et
chaque exigence de communication demandée de la part du maître est tracée conjointement avec la réaction propre correspondante.

13. Procédé selon la revendication 12,
**caractérisé en ce que**,
chaque appareil asservi (1') participant à une procédure de test est synchronisé par l'appareil maître (1) respectif aux exigences de communication de la procédure de test.

14. Procédé selon la revendication 13,
**caractérisé en ce que**,
la synchronisation des appareils de test (1, 1') participant à une procédure de test est réalisée via un second réseau de communication (6) indépendant du réseau de communication mobile (2) à tester.

15. Procédé selon la revendication 14,
**caractérisé en ce que**,
la synchronisation est commutée via une liaison modem (13, 7, 6, 7', 13).

16. Procédé selon une des revendications 12 à 15,
**caractérisé en ce que**,
après le déroulement de la procédure de test, les données de taxation tracées dans chaque appareil de test (1, 1') sont comparées aux données de taxation saisies dans les systèmes de commutation (21/1, 21/2) du réseau de communication mobile (2).

17. Procédé selon une des revendications 12 à 15,
**caractérisé en ce que**,
après le déroulement de la procédure de test, les étapes de test tracées dans l'appareil maître (1) sont comparées à celles tracées dans les appareils asservis (1') ayant participé à la procédure de test.
